# EUROPÄISCHE PATENTANMELDUNG

(11) **EP 4 744 614 A1**
(43) Veröffentlichungstag der Anmeldung: **20.05.2026**
(21) Anmeldenummer: 24213186.0
(22) Anmeldetag: 15.11.2024
(51) Int. Cl.: A61C 1/06, A61C 1/07

(54) **STEUEREINHEIT ZUM BETREIBEN ZAHNMEDIZINISCHER INSTRUMENTE**

(71) Anmelder: KaVo Dental GmbH, 88400 Biberach an der Riss (DE)
(72) Erfinder: BÜRK, Richard, 88433 Alberweiler (DE)
(74) Vertreter: Thun, Clemens

(57) **Zusammenfassung**

Eine Steuereinheit (1) zum Betreiben zahnmedizinischer Instrumente weist Anschlüsse (41, 42) für die zu betreibenden Instrumente sowie eine Motorelektronik (5) zum Versorgen eines angeschlossenen Motor-Instruments (100) auf, wobei die Motorelektronik (5) ein Steuerungsteil (10) sowie eine von dem Steuerungsteil (10) betriebene Endstufe (20) aufweist, welche drei Ausgänge (21, 22, 23) aufweist, die zum Versorgen eines angeschlossenen Motor-Instruments (100) mit einem 3-Phasen-Wechselstrom vorgehen sind. Ferner ist ein Anschluss (42) für ein Ultraschall-Behandlungsinstrument (200) vorgesehen, wobei die Motorelektronik (5) dazu ausgebildet ist, zwei der drei Ausgänge (21, 22, 23) der Endstufe (20) zu verwenden, um das piezoelektrische Element eines angeschlossenen Ultraschall-Behandlungsinstruments (200) mit Wechselspannung zu versorgen.

## Beschreibung

Die vorliegende Erfindung betrifft eine Steuereinheit, die zum Betreiben zahnmedizinischer Instrumente vorgesehen ist, wobei die Instrumente elektrisch betrieben werden. Ferner betrifft die vorliegende Erfindung eine zahnmedizinische Behandlungseinheit zum Versorgen derartiger zahnmedizinischer Instrumente.

Zahnmedizinische Behandlungseinheiten stellen die zentrale Komponente eines zahnärztlichen Behandlungsplatzes dar. Ein derartiger Behandlungsplatz umfasst in der Regel einen verstellbaren Stuhl für den Patienten sowie verschiedene Instrumente und Geräte, mit deren Hilfe Untersuchungen und/oder Behandlungen durchgeführt werden können. Alle Instrumente eines solchen Behandlungsplatzes werden in der Regel zentral von der Behandlungseinheit gesteuert, wobei eine weitere Aufgabe darin besteht, den verschiedenen Instrumenten die benötigten Medien zur Verfügung zu stellen, die den Betrieb der Instrumente ermöglichen und die Durchführung einer Untersuchung oder Behandlung unterstützen. Neben Strom gehören zu diesen zusätzlich genutzten Medien beispielsweise Luft und/oder Wasser.

Ursprünglich handelte es sich bei den von der Behandlungseinheit versorgten zahnmedizinischen Instrumenten in der Regel um pneumatisch betriebene Instrumente, die mit Druckluft versorgt wurden. Beispiele hierfür sind zahnärztliche Turbinenhandstücke, bei denen der zur Bearbeitung eines Zahns verwendete Bohrer durch eine Luftturbine angetrieben wird, oder pneumatisch betriebene sogenannte Zahnsteinentfernungsgeräte bzw. Scaler, bei denen die Behandlungsspitze mithilfe von Druckluft in Schwingungen versetzt wird, um eine Zahnoberfläche zu bearbeiten. In diesen Fällen erfolgte die Ansteuerung des jeweiligen zahnmedizinischen Instruments dadurch, dass ein beispielsweise mithilfe eines sogenannten Fußanlassers erzeugtes Steuersignal in Druckluft mit einem dem Signal entsprechenden Druck umgesetzt wurde.

Auch wenn derartige pneumatisch betriebene zahnmedizinische Instrumente nach wie vor im Einsatz sind und sich vielfach bewährt haben, kommen mittlerweile vermehrt elektrisch betriebene zahnmedizinische Instrumente zum Einsatz. Obwohl diese in der Regel komplexer aufgebaut sind als pneumatisch betriebene Instrumente, bieten sie Vorteile hinsichtlich der Steuerungsmöglichkeiten. Beispielsweise ermöglicht der elektrische Betrieb eines Bohrhandstücks, sowohl die Drehzahl als auch das von dem Bohrer ausgeübte Drehmoment zumindest innerhalb gewisser Bereiche stufenlos und präzise zu regeln. In ähnlicher Weise bietet auch der elektrische Betrieb eines Zahnsteinentfernungsgeräts, das ein piezoelektrisches Element zur Erzeugung von Ultraschallschwingungen verwendet, Vorteile hinsichtlich der Steuerungsmöglichkeiten.

Der Betrieb solcher elektrischer zahnmedizinischer Instrumente wird dadurch ermöglicht, dass die Behandlungseinheit zusätzlich eine Steuereinheit zum Betreiben dieser Instrumente aufweist. Die Steuereinheit ist elektrisch mit den zu betreibenden zahnmedizinischen Instrumenten verbunden und setzt ein beispielsweise durch den Zahnarzt oder eine Assistenzkraft erzeugtes Steuersignal in eine geeignete Versorgungsspannung für das Instrument um. Derartige Steuereinheiten, die gegebenenfalls auch getrennt von einer zahnmedizinischen Behandlungseinheit verwendet werden können, sind bereits aus dem Stand der Technik bekannt.

Sollen nunmehr derartige elektrisch betriebene zahnmedizinische Instrumente an einem zahnmedizinischen Arbeitsplatz zum Einsatz kommen, ergibt sich das Problem, dass hinsichtlich der elektronischen Ansteuerung unterschiedliche Anforderungen bestehen. Sogenannte Motor-Instrumente, die einen Elektromotor enthalten, mit dessen Hilfe ein Behandlungswerkzeug in Rotation versetzt wird, werden üblicherweise mithilfe eines Drei-Phasen-Wechselstroms betrieben, wobei die Amplitude der Spannung etwa im Bereich von 36 Volt liegt. Ultraschall-Behandlungsinstrumente hingegen enthalten in der Regel ein piezoelektrisches Element, das mit einer Zwei-Phasen-Wechselspannung versorgt wird, die deutlich höher ist, beispielsweise im Bereich von etwa 200 Volt. Steuereinheiten, die zum Betreiben beider Instrumententypen vorgesehen sind, weisen dementsprechend bislang zumindest zwei separate sogenannte Endstufen auf, die jeweils zur Versorgung eines bestimmten Instrumententyps ausgelegt sind. Über die entsprechende Endstufe wird dann entweder das Motor-Instrument oder das Ultraschall-Behandlungsinstrument mit einer geeigneten Spannung versorgt. Der Betrieb verschiedener Instrumententypen ist dementsprechend mit einem verhältnismäßig hohen Aufwand verbunden.

Der vorliegenden Erfindung liegt die Aufgabenstellung zugrunde, eine Möglichkeit zu schaffen, den Aufwand beim Betreiben verschiedener Typen zahnmedizinischer Instrumente zu reduzieren, wobei dennoch zumindest der Betrieb eines Motor-Instruments sowie eines Ultraschall-Behandlungsinstruments ermöglicht wird.

Diese Aufgabe wird durch eine Steuereinheit zum Betreiben zahnmedizinischer Instrumente gelöst, welche die Merkmale des Anspruchs 1 aufweist. Vorteilhafte Weiterentwicklungen der Erfindung sind in den abhängigen Ansprüchen beschrieben.

Die erfindungsgemäße Lösung basiert auf der Erkenntnis, dass die Endstufe, die für den Betrieb eines Motor-Instruments vorgesehen ist und den zum Betreiben des Motor-Instruments erforderlichen Drei-Phasen-Wechselstrom erzeugt, auch zum Betreiben des Ultraschall-Behandlungsinstruments genutzt werden kann. Dies geschieht, indem lediglich zwei der drei Ausgänge der Endstufe zur Versorgung des Ultraschall-Behandlungsinstruments verwendet werden. Somit entfällt die Notwendigkeit einer separaten Endstufe für das Ultraschall-Behandlungsinstrument, da gemäß der erfindungsgemäßen Lösung ein Teil der für den Betrieb des Motor-Instruments genutzten Komponenten auch zur Erzeugung der für das piezoelektrische Element des Ultraschall-Behandlungsinstruments benötigten Wechselspannung verwendet wird. Letztendlich muss die Endstufe lediglich durch die Motorelektronik der Steuereinheit so gesteuert werden, dass je nach angeschlossenem Instrumententyp entweder über die drei Ausgänge der Endstufe ein Drei-Phasen-Wechselstrom oder über zwei der drei Ausgänge eine Zwei-Phasen-Wechselspannung ausgegeben wird.

Gemäß der vorliegenden Erfindung wird daher eine Steuereinheit zum Betreiben zahnmedizinischer Instrumente vorgeschlagen, die Folgendes aufweist:
- Anschlüsse für die zu betreibenden Instrumente, wobei zumindest ein erster Anschluss für ein medizinisches Motor-Instrument vorgesehen ist, das einen Elektromotor zum Antreiben eines Werkzeugs aufweist, sowie
- eine Motorelektronik zum Versorgen eines angeschlossenen Motor-Instruments, wobei die Motorelektronik ein Steuerungsteil sowie eine von dem Steuerungsteil betriebene Endstufe aufweist, welche drei Ausgänge aufweist, die zum Versorgen eines an den ersten Anschluss angeschlossenen Motor-Instruments mit einem Drei-Phasen-Wechselstrom vorgesehen sind,
- wobei die Anschlüsse für die zu betreibenden Instrumente zumindest einen zweiten Anschluss für ein Ultraschall-Behandlungsinstrument umfassen, welches ein piezoelektrisches Element zum Erzeugen von Ultraschall-Schwingungen aufweist,
- und wobei erfindungsgemäß die Motorelektronik dazu ausgebildet ist, zwei der drei Ausgänge der Endstufe zu verwenden, um das piezoelektrische Element eines an dem zweiten Anschluss angeschlossenen Ultraschall-Behandlungsinstrument mit Wechselspannung zu versorgen.

Gemäß einer vorteilhaften Weiterbildung der Erfindung ist vorgesehen, dass die Steuereinheit eine Schaltmatrix aufweist, die eingangsseitig mit den Ausgängen der Endstufe der Motorelektronik verbunden ist und dazu dient, abhängig von der Auswahl des zu betreibenden Instruments entweder die drei Ausgänge der Endstufe der Motorelektronik mit dem ersten Anschluss für ein medizinisches Motor-Instrument oder zwei der drei Ausgänge der Endstufe mit dem zweiten Anschluss für ein Ultraschall-Behandlungsinstrument elektrisch zu verbinden. Neben einem entsprechend geeigneten Betrieb der Endstufe ist es auch erforderlich, die Verbindung mit dem entsprechenden Anschluss für das jeweilige zahnmedizinische Instrument herzustellen. In der bevorzugten Ausführungsform der Erfindung wird hierfür die erwähnte Schaltmatrix verwendet. Eine solche Schaltmatrix ist in Steuereinheiten zum Betreiben zahnmedizinischer Instrumente oft bereits vorhanden, da bei zahnärztlichen Behandlungsplätzen häufig mehrere Motor-Handstücke an die Steuereinheit angeschlossen werden können. Da diese Handstücke in der Regel nicht parallel, sondern jeweils nur einzeln betrieben werden, wird auf eine individuelle Motorelektronik verzichtet. Stattdessen werden die Ausgänge der Endstufe abhängig von dem Instrument, das gerade verwendet wird, mit dem entsprechenden Anschluss verbunden. Während bisher jedoch immer alle drei Ausgänge der Endstufe mit einem Motor-Handstück verbunden wurden, wird nun mithilfe der Schaltmatrix bei Bedarf auch eine Verbindung von nur zwei Ausgängen der Endstufe mit dem Anschluss für das Ultraschall-Behandlungsinstrument hergestellt. Da eine solche Schaltmatrix wie bereits erwähnt in der Regel ohnehin vorhanden ist, führt diese Lösung zu keinem Mehraufwand.

Wie oben erläutert, unterscheidet sich in der Regel die zum Betreiben eines Motor-Handstücks erforderliche Spannung von der Spannung, die zum Betreiben eines Ultraschall-Behandlungsinstruments benötigt wird. Um diesem Unterschied gerecht zu werden, kann vorgesehen sein, dass zwischen die Schaltmatrix und den zweiten Anschluss für das Ultraschall-Behandlungsinstrument eine Anpassungsstufe geschaltet wird, die die von der Endstufe ausgegebene Spannung auf einen für das piezoelektrische Element geeigneten Spannungspegel transformiert. Dazu kann die Anpassungsstufe intern einen Übertrager zur Einstellung des Spannungspegels aufweisen.

Da die Elektromotoren der Motor-Instrumente sowie die piezoelektrischen Elemente bestimmte Anforderungen an die Versorgungsspannung stellen, ist es bevorzugt, dass das Steuerungsteil dazu ausgelegt ist, die Endstufe derart zu betreiben, dass die Spannungssignale an den Ausgängen der Endstufe abhängig von dem zu betreibenden medizinischen Instrument erzeugt werden. Auf diese Weise wird das Instrument mit der für seinen Betrieb optimalen Spannung versorgt. Insbesondere können für jeden Ausgang der Endstufe Parameter wie Frequenz, Phase, PWM-Duty-Cycle und/oder Amplitude der abgegebenen Spannung abhängig von dem zu betreibenden Instrument eingestellt werden. Dabei ist ferner vorgesehen, dass bei der Erzeugung der Spannungssignale an den Ausgängen der Endstufe zusätzlich zumindest einer der folgenden Parameter berücksichtigt wird:
- der Typ des Motors oder des piezoelektrischen Elements des zu betreibenden Instruments,
- die vorgegebene Leistung für den Betrieb des Motors oder des piezoelektrischen Elements,
- die gewünschte Motordrehzahl oder das gewünschte Drehmoment des Motors oder die gewünschte Schwingweite eines vom piezoelektrischen Element angetriebenen Werkzeugs.

Somit bleiben die Vorteile der elektronischen Ansteuerung zahnmedizinischer Instrumente erhalten. Das bedeutet, dass deren Arbeitsparameter (wie Drehzahl, Drehmoment, Schwingfrequenz oder Schwingweite) nach Bedarf eingestellt oder angepasst werden können, um die Behandlung optimal durchführen zu können.

Besonders bevorzugt ist die Steuereinheit dazu ausgebildet, selbstständig den Anschluss eines medizinischen Instruments an den Anschlüssen zu erkennen und abhängig von dem erkannten Instrument die Endstufe zu betreiben. Ein Benutzer muss also nicht zunächst manuell einen bestimmten Betrieb auswählen, sondern kann allein beispielsweise durch die Entnahme des Instruments aus der entsprechenden Instrumentenablage des Behandlungsplatzes signalisieren, welches Instrument gerade verwendet wird, wobei dann die Steuereinheit den Betrieb entsprechend automatisch anpasst.

Die Steuereinheit kann insbesondere so ausgeführt sein, dass die Endstufe der Motorelektronik drei individuell steuerbare Halbbrücken aufweist, um an den insgesamt drei Ausgängen der Endstufe jeweils die entsprechenden Spannungssignale zu erzeugen. Insbesondere kann das Steuerungsteil einen Mikrocontroller enthalten, der entsprechende Treiber für die steuerbaren Halbbrücken digital ansteuert. Dadurch wird eine größtmögliche Flexibilität erreicht, um im Sinne der vorliegenden Erfindung mit einer einzigen Endstufe verschiedene Instrumententypen betreiben zu können.

Gemäß der vorliegenden Erfindung wird auch eine zahnmedizinische Behandlungseinheit zur Versorgung zahnmedizinischer Instrumente vorgeschlagen. Diese Behandlungseinheit weist zumindest eine Steuereinheit gemäß der obigen Beschreibung auf und ist ferner dazu ausgebildet, angeschlossene zahnmedizinische Instrumente zusätzlich mit Medien, beispielsweise Luft, Wasser und/oder Licht zu versorgen.

Weiterhin wird gemäß der vorliegenden Erfindung ein Verfahren zum Betreiben zahnmedizinischer Instrumente mithilfe einer Steuereinheit, die Anschlüsse für die zu betreibenden Instrumente sowie eine Motorelektronik aufweist, welche drei Ausgänge zum Abgeben eines Drei-Phasen-Wechselstroms aufweist, vorgeschlagen, wobei abhängig von einem Typ eines zu betreibenden zahnmedizinischen Instruments in einem Motorbetrieb über die drei Ausgänge ein Drei-Phasen-Wechselstrom oder in einem Piezobetrieb über zwei der drei Ausgänge eine Wechselspannung abgegeben wird. Dabei wird vorzugsweise der Drei-Phasen-Wechselstrom abgegeben, wenn es sich bei dem zu betreibenden Instrument um ein zahnmedizinisches Motor-Instrument handelt, dass einen Elektromotor zum Antreiben eines Werkzeugs aufweist, und es wird eine Wechselspannung abgegeben, wenn es sich bei dem zu betreibenden Instrument um ein Ultraschall-Behandlungsinstrument handelt, welches ein piezoelektrisches Element zum Erzeugen von Ultraschall-Schwingungen aufweist.

Nachfolgend soll die Erfindung anhand der beiliegenden Zeichnung näher erläutert werden. Es zeigen:
- Figur 1: die Ansicht eines üblichen zahnärztlichen Behandlungsplatzes;
- Figur 2: die Ansteuerung eines zahnmedizinischen Motor-Handstücks mit einem Drei-Phasen-Wechselstrom;
- Figur 3: die Ansteuerung eines zahnärztlichen Ultraschall-Behandlungsinstruments mit einer Wechselspannung;
- Figur 4: die erfindungsgemäße Nutzung einer einzigen Motor-Endstufe zum wahlweisen Betreiben eines Motor-Handstücks oder eines Ultraschall-Behandlungsinstruments und
- Figur 5: ein Flussdiagramm zur Darstellung des Betriebs der Steuereinheit entsprechend dem erfindungsgemäßen Verfahren abhängig von dem zu betreibenden Instrumenten-Typ.

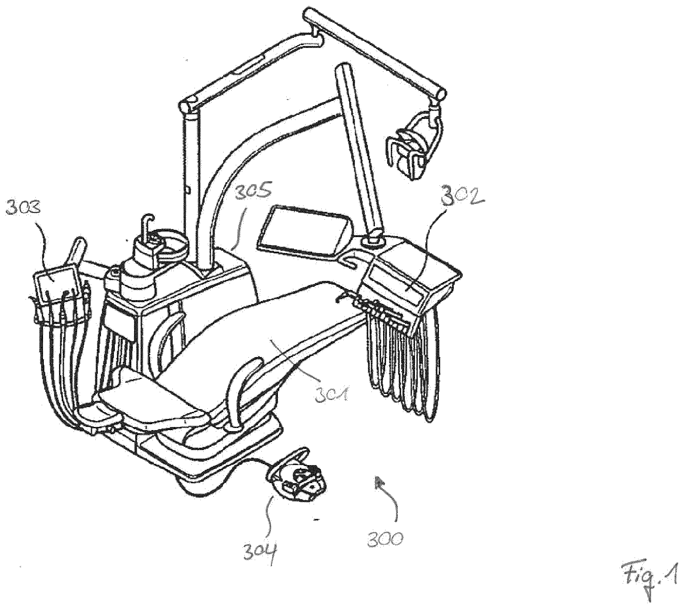

In Figur 1 ist zunächst ein allgemein mit dem Bezugszeichen 300 versehener zahnärztlicher Behandlungsplatz dargestellt, der unter anderem einen üblichen Patientenstuhl 301 umfasst, auf dem der Patient während einer Untersuchung bzw. Behandlung sitzt oder liegt. Für die Durchführung der Untersuchung bzw. Behandlung stehen verschiedene Instrumente zur Verfügung, die an zwei Einheiten bereitgestellt sind, welche mit den Bezugszeichen 302 und 303 versehen sind.

Die größere Einheit 302 ist die sogenannte Arzteinheit, die eine Ablage für mehrere verschiedene zahnmedizinische Instrumente aufweist. Wie erkennbar ist, sind diese Instrumente entnehmbar in köcherartigen Aufnahmen gelagert, sodass sie jederzeit zur Benutzung aus ihrer Aufnahme entnommen werden können. Die Verbindung der Instrumente zu der Arzteinheit 302 erfolgt jeweils über einen entsprechenden Schlauch. Analog dazu ist oftmals auf der gegenüberliegenden Seite des Patientenstuhls 301 eine weitere Einheit, die sogenannte Assistenzeinheit 303, vorgesehen, an der in analoger Weise eine reduzierte Anzahl von Instrumenten bereitgestellt ist. Diese zusätzliche Einheit muss jedoch nicht zwingend vorhanden sein.

Abhängig von dem gerade verwendeten zahnmedizinischen Instrument ist dieses oft so ausgeführt, dass es zusätzlich auch Medien wie z.B. Luft und/oder Wasser abgibt. Solche Medien werden durch die zentrale Behandlungseinheit 305 bereitgestellt, welche das Kernstück des Behandlungsplatzes 300 darstellt. Im Wesentlichen sind fast alle Komponenten des Behandlungsplatzes 300 an dieser zentralen Behandlungseinheit 305 befestigt oder mit dieser verbunden und werden über diese mit Strom versorgt bzw. gesteuert. Auch die oben genannten zusätzlichen Medien werden von der Behandlungseinheit 305 aus zur Arzteinheit 302, zur Assistenzeinheit 303 und letztendlich zu den Instrumenten geleitet. Die entsprechenden Leitungen verlaufen beispielsweise über das Gestänge, das zur Halterung der Arzteinheit 302 dient, und von dort über die bereits erwähnten Schläuche zu den Instrumenten.

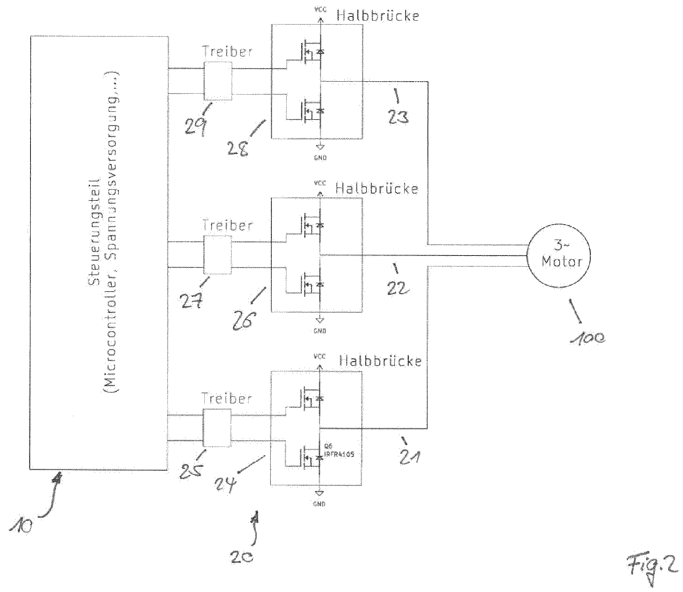

Darüber hinaus erfolgt bei elektronischen zahnmedizinischen Instrumenten auch die Stromversorgung der Instrumente von der Behandlungseinheit 305 aus, um sie mit einer geeigneten Spannung zu betreiben, die der Benutzer je nach gewünschter Leistung anfordert. Diese Leistung kann beispielsweise mit einer nicht näher dargestellten Bedieneinheit vorab programmiert oder durch ein an dem Instrument befindliches Bedienteil eingestellt werden. Die Drehzahl eines Motor-Handstücks hingegen wird oft durch den in Figur 1 ebenfalls erkennbaren sogenannten Fußanlasser 304 gesteuert. Mithilfe dieses Fußanlassers 304 kann der Benutzer die gewünschte Drehzahl bzw. Leistung einstellen, die dann in eine entsprechende Versorgungsspannung für den Motor des zahnmedizinischen Instruments umgewandelt wird. Die hierfür notwendige Steuereinheit kann Teil der Behandlungseinheit 305 selbst oder beispielsweise der Arzteinheit 302 sein. Figur 2 zeigt das übliche Verfahren zum Betreiben eines zahnmedizinischen Motor-Instruments.

In Figur 2 ist das Motor-Instrument mit dem Bezugszeichen 100 versehen, wobei der darin integrierte Elektromotor, der in dieser Abbildung nicht näher gezeigt ist, mithilfe einer 3-Phasen-Wechselspannung betrieben wird. Um diesen Motor anzutreiben, ist die Motorelektronik des zahnärztlichen Behandlungsplatzes derart ausgebildet, dass sie ein Steuerungsteil 10 umfasst, welches die Aufgabe hat, eine Endstufe 20 anzusteuern. Diese Endstufe 20 ist für die Erzeugung der drei getrennten Wechselspannungen zuständig, die für den Betrieb des Elektromotors notwendig sind.

Die Erzeugung der drei Phasen erfolgt im dargestellten Beispiel durch den Einsatz von sogenannten Halbbrücken 24, 26 und 28. Diese Halbbrücken 24, 26, 28 bestehen jeweils aus zwei Transistoren oder Schaltern, die in einer bestimmten Weise alternierend angesteuert werden, um die gewünschte Wechselspannung an den Ausgängen 21, 22 und 23 zu erzeugen. Jede dieser Halbbrücken 24, 26, 28 ist mit einem entsprechenden Treiber 25, 27, 29 verbunden, der die Transistoren der zugehörigen Halbbrücke abwechselnd ein- und ausschaltet. Durch diese alternierende Ansteuerung der Transistoren wird an jedem der Ausgänge 21, 22 und 23 eine sich verändernde Wechselspannung erzeugt, die zur Versorgung des Elektromotors dient.

Der Betrieb des Motors des Handstücks 100 hängt stark von der präzisen Steuerung der Spannungsparameter ab. Das Steuerungsteil 10 ist in der Lage, die Schalter der drei Halbbrücken 24, 26 und 28 so zu steuern, dass wichtige Parameter wie die Frequenz, die Phase, der sogenannte PWM-Duty-Cycle (das Tastverhältnis bei der Pulsweitenmodulation) sowie die Amplitude der abgegebenen Spannung angepasst werden können. Diese Anpassungen ermöglichen es, nicht nur den Elektromotor des Motor-Handstücks 100 in Betrieb zu setzen, sondern auch spezifische Betriebsparameter wie die Drehzahl des Motors oder das ausgeübte Drehmoment des Werkzeugs genau einzustellen. Dies ist wichtig, um eine präzise Steuerung und Anpassung während einer zahnmedizinischen Behandlung zu gewährleisten.

Das Steuerungsteil 10 enthält einen Mikrocontroller, der die zentrale Recheneinheit darstellt und dafür sorgt, dass die Ansteuerung der Treiber 25, 27 und 29 in Übereinstimmung mit den eingangsseitig vorgegebenen Sollwerten erfolgt. Diese Sollwerte können beispielsweise durch den Benutzer oder die Behandlungseinheit selbst vorgegeben werden, um den gewünschten Betrieb des Motors zu gewährleisten. Der Mikrocontroller überwacht und steuert die Signale so, dass der Elektromotor genau die gewünschte Leistung und Geschwindigkeit erbringt.

Das hier beschriebene Verfahren zur Steuerung und zum Betrieb eines zahnmedizinischen Motor-Handstücks ist an sich bereits bekannt. Es ermöglicht einen reibungslosen und präzisen Betrieb des Elektromotors, wobei die Anpassung der Betriebsparameter flexibel und in Echtzeit erfolgt, um den spezifischen Anforderungen während der zahnärztlichen Behandlung gerecht zu werden.

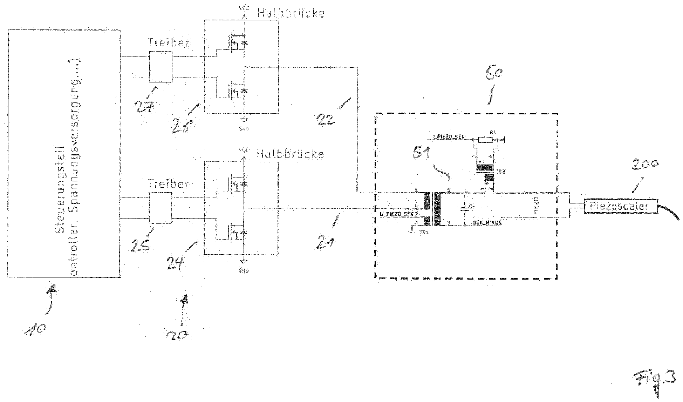

Figur 3 zeigt im Gegensatz dazu die übliche Ansteuerung eines Ultraschall-Behandlungsinstruments 200, das ein piezoelektrisches Element zur Erzeugung der Ultraschallschwingungen verwendet. Der auf den ersten Blick erkennbare Unterschied im Vergleich zur Ansteuerung des Motor-Instruments 100 besteht darin, dass das Ultraschall-Behandlungsinstrument 200 lediglich mit einer 2-Phasen-Wechselspannung betrieben wird.

Auch hier ist ein Steuerungsteil 10 vorgesehen, das die beiden Treiber 25 und 27 ansteuert, welche die Schalter der zwei zugehörigen Halbbrücken 24 und 26 der Endstufe 20 steuern. Hierdurch wird an den beiden Ausgängen 21 und 22 wiederum jeweils ein variables Spannungssignal erzeugt, ähnlich wie bei der Ansteuerung des Motor-Instruments 100. In diesem Fall besteht ebenfalls die Möglichkeit, durch die gezielte Ansteuerung der Treiber 25 und 27 die Frequenz, die Phase, den PWM-Duty-Cycle (Tastverhältnis) und/oder die Amplitude der abgegebenen Spannung für jeden Ausgang 21 und 22 der Endstufe 20 individuell einzustellen. Auch beim Betreiben des Ultraschall-Behandlungsinstruments 200 kann somit die Leistung während des Betriebs elektronisch angepasst werden.

Da - wie oben erwähnt - die Amplitude der dem Ultraschall-Behandlungsinstrument 200 zugeführten Spannung in einem bestimmten Bereich liegen muss, ist in der in Figur 3 dargestellten Variante zwischen den Ausgängen 21 und 22 der Endstufe 20 und dem Ultraschall-Behandlungsinstrument 200 eine Anpassungsstufe 50 geschaltet. Diese dient dazu, die von der Endstufe 20 abgegebene Spannung auf einen zum Betrieb des piezoelektrischen Elements des Ultraschall-Behandlungsinstruments 200 geeigneten Spannungspegel zu transformieren. Intern enthält die Anpassungsstufe einen Übertrager 51, durch den die Spannung entsprechend angepasst wird.

Alternativ wäre es auch möglich, auf die Anpassungsstufe 50 zu verzichten und stattdessen die beiden Halbbrücken 24 und 26 bereits mit einer entsprechend ausgewählten Eingangsspannung VCC zu versorgen. Diese wird dann so gewählt, dass die an den Ausgängen 21 und 22 ausgegebene Spannung direkt in einem für das Ultraschall-Behandlungsinstrument 200 geeigneten Bereich liegt.

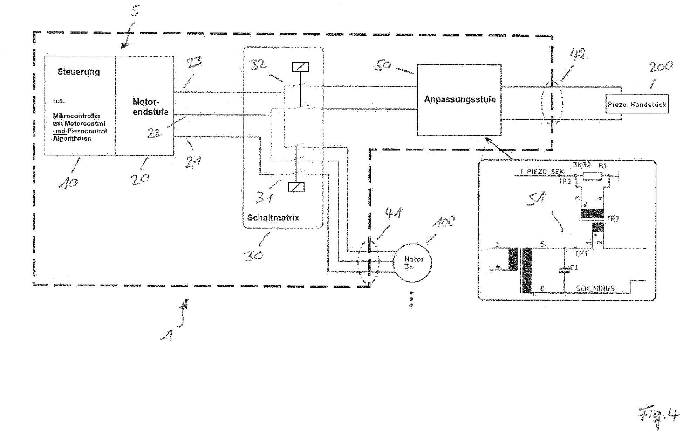

Die in den Figuren 2 und 3 dargestellten Konzepte zur Ansteuerung von Motor-Instrumenten 100 bzw. Ultraschall-Behandlungsinstrumenten 200 wurden bisher getrennt voneinander realisiert. Dies bedeutet, dass für jeden Instrumententyp jeweils eine eigene Endstufe 20 bereitgestellt wurde. In Figur 4 wird nun eine erfindungsgemäße Lösung gezeigt, die den Aufwand zur Ansteuerung verschiedener Instrumententypen reduziert, sodass insbesondere die Notwendigkeit einer zweiten Motor-Endstufe entfällt.

Die in Figur 4 dargestellte Steuereinheit 1, die wie oben erwähnt beispielsweise in die Versorgungseinheit 305 des zahnärztlichen Behandlungsplatzes 300 oder die Arzteinheit 302 integriert ist, weist zunächst die gleichen Komponenten auf, wie sie insbesondere im Zusammenhang mit der Ansteuerung des Motorhandstücks 100 in Figur 2 beschrieben wurden. Eine Motorelektronik 5, die zum Versorgen angeschlossener Instrumente 100, 200 vorgesehen ist, besteht also aus einem Steuerungsteil 10 mit einem integrierten Mikrocontroller sowie einer zugehörigen Endstufe 20. Die Endstufe 20 verfügt über drei Ausgänge 21, 22, 23, über die jeweils Spannungssignale zum Betreiben elektrischer Komponenten ausgegeben werden können. Intern kann die Endstufe 20, wie auch in Figur 2 gezeigt, drei Halbbrücken 24, 26, 28 umfassen, die jeweils einem der drei Ausgänge 21, 22, 23 zugeordnet sind, wobei diese Halbbrücken 24, 26, 28 von Treibern 25, 27, 29 angesteuert werden, die wiederum vom Steuerungsteil 10 digital kontrolliert werden. Die auf diesem Wege erzeugten Spannungssignale können beispielsweise an einen ersten Anschluss 41 weitergeleitet werden, der für den Anschluss eines zahnärztlichen Motorhandstücks 100 vorgesehen ist.

Erfindungsgemäß ist nun vorgesehen, dass die Motorelektronik 5 auch zum Betreiben eines Ultraschall-Behandlungsinstruments 200 genutzt werden kann. In diesem Fall werden lediglich zwei der drei Ausgänge 21, 22, 23 der Endstufe 20 verwendet, um dem an den Anschluss 42 angeschlossenen Ultraschall-Behandlungsinstrument 200 eine 2-Phasen-Wechselspannung zur Verfügung zu stellen. Die beiden Halbbrücken, die zur Erzeugung der 2-Phasen-Wechselspannung verantwortlich sind, können in üblicher Weise voll genutzt werden, während die dritte Halbbrücke in diesem Fall ungenutzt bleibt. Dies führt jedoch zu keinerlei Einschränkungen, abgesehen davon, dass ein gleichzeitiger Betrieb des Motor-Instruments 100 und des Ultraschall-Behandlungsinstruments 200 nicht möglich ist. Dies stellt jedoch keinen relevanten Nachteil dar, da ein gleichzeitiger Einsatz beider Instrumententypen in der Praxis nicht vorkommt.

Durch die Erkenntnis, dass die ursprünglich zur Ansteuerung des Motor-Instruments 100 vorgesehene Motorelektronik 5 auch zum Betreiben des Ultraschall-Behandlungsinstruments 200 genutzt werden kann, lässt sich somit eine deutliche Reduzierung der elektronischen Komponenten in der Steuereinheit 1 erreichen.

Im Rahmen der erfindungsgemäßen Lösung ist es selbstverständlich erforderlich sicherzustellen, dass die von der Endstufe 20 zur Verfügung gestellten zwei oder drei Spannungssignale auch an den jeweiligen Anschluss 41 oder 42 weitergeleitet werden, um das entsprechende Instrument 100 oder 200 zu betreiben. Verantwortlich hierfür ist eine in der Steuereinheit 1 vorgesehene Schaltmatrix 30, die eingangsseitig mit den drei Ausgängen 21, 22, 23 der Motorendstufe 20 verbunden ist und ausgangsseitig mit den Anschlüssen 41 bzw. 42. Die internen Schalter 31 und 32 dieser Schaltmatrix 30 können so angesteuert werden, dass entweder die an den drei Ausgängen 21, 22, 23 der Endstufe 20 anliegenden Spannungen an den Anschluss 41 weitergeleitet werden, oder die Spannungen der Ausgänge 22 und 23 der Endstufe 20 zum Anschluss 42 für das Ultraschall-Behandlungsinstrument 200 geführt werden.

Abhängig davon, welche Instrumententypen betrieben werden sollen, muss also einerseits über die Schaltmatrix 30 die entsprechende Verbindung des Anschlusses 41 bzw. 42 mit der Motorendstufe 20 hergestellt werden. Gleichzeitig wird mithilfe des Steuerungsteils 10 der Betrieb der Endstufe 20 so angepasst, dass eine für das jeweilige Instrument geeignete 2- bzw.-3-Phasen-Versorgungsspannung erzeugt wird.

Es ist anzumerken, dass die in Figur 4 dargestellte Schaltmatrix 30 oft ohnehin bereits in Steuereinheiten zahnärztlicher Behandlungsplätze vorhanden ist, da üblicherweise die Möglichkeit besteht, wie auch in Figur 4 angedeutet, mehrere Motorhandstücke an die Steuereinheit 1 anzuschließen. Da jedoch nicht für jedes Motor-Handstück eine eigene Endstufe 20 vorgesehen ist, kommt auch in diesem Fall lediglich eine einzige Endstufe 20 zum Einsatz, die dann über die Schaltmatrix 30 mit dem Anschluss des aktuell benutzten Motor-Handstücks verbunden wird. Dieses Konzept wird nun, wie bereits erwähnt, auf erfinderische Weise auch auf andere Instrumententypen ausgeweitet, wobei zusätzlich eine angepasste Nutzung der Motorendstufe 20 vorliegt.

Wie bereits beschrieben, weicht in der Regel die Amplitude der Versorgungsspannung, die für das Motor-Instrument 100 genutzt wird, von der Amplitude der für das Ultraschall-Behandlungsinstrument 200 vorgesehenen Spannung ab. Um dennoch eine einzige MotorEndstufe 20 für beide Instrumente verwenden zu können, ist vorgesehen, eine Anpassungsstufe 50 zu nutzen, wie sie bereits im Zusammenhang mit Figur 3 erläutert wurde. Diese Anpassungsstufe 50 enthält intern einen entsprechenden Übertrager 51, der die von der Endstufe 20 ausgegebene Spannung auf einen geeigneten Spannungswert transformiert, der für den Betrieb des Piezoelements des Ultraschall-Behandlungsinstruments 200 erforderlich ist. Schaltungstechnisch ist diese Anpassungsstufe 50 unmittelbar dem Ausgang 42 für das Ultraschall-Behandlungsinstrument 200 vorgeschaltet.

Weiterhin ist darauf hinzuweisen, dass zur Realisierung der Endstufe 20 alternativ zu den dargestellten Halbbrücken selbstverständlich auch andere steuerbare Schaltungskonzepte verwendet werden können, um an den Ausgängen 21, 22, 23 der Endstufe 20 eine einstellbare Spannung zu erzeugen. Entscheidend ist dabei, dass die Spannungen unabhängig voneinander ausgegeben werden können und die Möglichkeit besteht, bestimmte Parameter wie Frequenz, Phase, PWM-Duty-Cycle und/oder Amplitude gezielt einzustellen. Dies stellt sicher, dass die für das jeweilige Instrument und die gewünschten Betriebsparameter geeignete Versorgungsspannung bereitgestellt wird. Besonders berücksichtigt werden können dabei der Typ des Motors oder des piezoelektrischen Elements des zu betreibenden Instruments, eine vorgegebene Leistung für den Betrieb des Motors oder des piezoelektrischen Elements sowie die gewünschte Motordrehzahl oder das gewünschte Drehmoment des Motors. Ebenso kann die gewünschte Schwingweite eines von dem piezoelektrischen Element angetriebenen Werkzeugs eingestellt werden, um eine präzise Steuerung und Anpassung der Betriebsbedingungen zu gewährleisten.

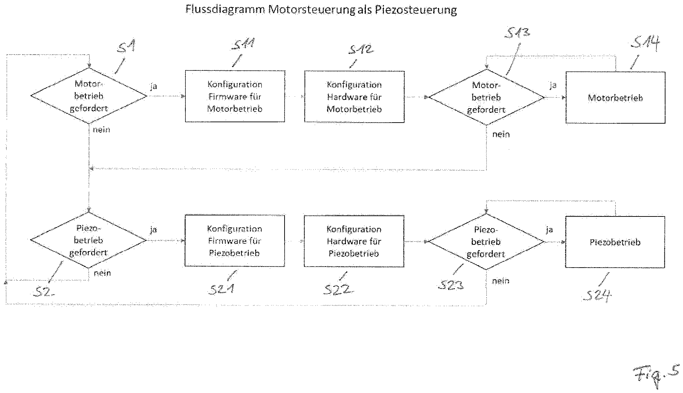

Der Ablauf der erfindungsgemäßen Vorgehensweise (Verfahrens) zur Motorsteuerung zum Betreiben zahnmedizinischer Instrumente ist schematisch in Figur 5 dargestellt. In ersten Entscheidungsschritten S1 bzw. S2 wird zunächst festgestellt, ob ein Motorbetrieb oder ein Piezobetrieb erforderlich ist. Mit anderen Worten: Es wird ermittelt, ob ein Handstück mit einem Elektromotor oder ein Ultraschall-Behandlungsinstrument genutzt werden soll. Diese Entscheidung kann auf verschiedene Weise getroffen werden. Zum einen kann sie auf Grundlage der manuellen Eingaben des Benutzers erfolgen, der über eine Bedieneinheit den gewünschten Modus auswählt. Alternativ wäre es jedoch auch möglich, dass das System diese Entscheidung selbstständig trifft, indem Sensoren erkennen, ob eines der Instrumente aus der entsprechenden Ablage entnommen und in einer Weise gehalten wird, die darauf hinweist, dass dieses Instrument für eine Untersuchung oder Behandlung genutzt werden soll.

Wird im Rahmen dieser Entscheidungsfindung festgestellt, dass ein Motorbetrieb erforderlich ist, also das Motor-Handstück verwendet werden soll, wird der Prozess eingeleitet, um die Betriebsbedingungen entsprechend anzupassen. Zunächst wird hierfür im Steuerungsteil 10 die Firmware so konfiguriert, dass der Mikrocontroller die eingangsseitig eintreffenden Sollwerte in geeignete Ausgangssignale zur Ansteuerung der Endstufe 20 umsetzt. Dies ermöglicht eine präzise Regelung der Motordrehzahl, des Drehmoments und anderer Parameter, die für den Betrieb des Motor-Handstücks relevant sind. Parallel dazu erfolgt in Schritt S 12 eine Konfiguration der Hardware. Dies umfasst insbesondere das Ansteuern der Schaltmatrix 30 derart, dass die von der Endstufe 20 erzeugten Spannungssignale an den Anschluss 41 weitergeleitet werden, der für das Motor-Handstück vorgesehen ist. Auf diese Weise wird das Handstück korrekt mit der erforderlichen Spannung versorgt und kann seine Funktion aufnehmen.

Sollte hingegen in Schritt S2 festgestellt werden, dass der Piezobetrieb gefordert ist, weil ein Ultraschall-Behandlungsinstrument verwendet werden soll, wird der Prozess in ähnlicher Weise angepasst. In den Schritten S21 und S22 erfolgt die Konfiguration der Firmware und der Hardware, um den Piezobetrieb zu unterstützen. Die Schaltmatrix 30 wird nunmehr also so umgeschaltet, dass die von der Endstufe 20 erzeugten Spannungssignale an den Anschluss 42 weitergeleitet werden, der für das Ultraschall-Behandlungsinstrument vorgesehen ist. Dabei wird ebenfalls sichergestellt, dass die Versorgungsspannung den Anforderungen des piezoelektrischen Elements entspricht, sodass dieses die notwendigen Ultraschallschwingungen erzeugen kann. Auch hier wird die benötigte Leistung präzise gesteuert, um eine optimale Funktion des Instruments während der Behandlung zu gewährleisten.

Die Konfiguration der Hardware in den Schritten S 12 und S22 kann darüber hinaus auch die Freigabe zusätzlicher Medien umfassen, die das verwendete Instrument unterstützen. Dazu zählen beispielsweise Luft oder Wasser, die bei vielen zahnmedizinischen Instrumenten für Kühlung oder Spülung während der Behandlung eingesetzt werden. Diese Medien können in Abhängigkeit vom ausgewählten Instrument automatisch bereitgestellt werden, um eine reibungslose und effiziente Behandlung zu ermöglichen.

Nach Abschluss der Konfigurationsschritte wird in den Schritten S 13 bzw. S23 nochmals überprüft, ob der gewünschte Betrieb den vorgenommenen Einstellungen entspricht. Hierbei wird sichergestellt, dass die Firmware und Hardware korrekt konfiguriert sind und dass die richtigen Spannungssignale an die entsprechenden Anschlüsse weitergeleitet werden. Sobald dies bestätigt ist, kann der Betrieb des Motor-Handstücks in Schritt S14 oder des Ultraschall-Behandlungsinstruments in Schritt S24 aufgenommen und fortgesetzt werden. Dieser Betrieb wird solange aufrechterhalten, bis das System im Rahmen einer kontinuierlichen Überprüfung in den Schritten S 13 bzw. S23 erkennt, dass der eingestellte Betrieb nicht mehr erforderlich ist. Dies könnte beispielsweise der Fall sein, wenn Sensoren feststellen, dass das verwendete Instrument in die Ablage zurückgelegt wurde. In einem solchen Fall würde der Ablauf wieder an den Ausgangspunkt zurückkehren und der Prozess von Neuem beginnen, um auf den nächsten Einsatz eines Instruments vorbereitet zu sein.

Zusammenfassend lässt sich sagen, dass die erfindungsgemäße Lösung den Aufwand für den Betrieb verschiedener zahnmedizinischer Instrumententypen deutlich reduziert. Dies wird erreicht, ohne Einschränkungen bei der Ansteuerung der Instrumente in Kauf nehmen zu müssen. Die Flexibilität des Systems ermöglicht eine effiziente und präzise Steuerung sowohl von Motor-Handstücken als auch von Ultraschall-Behandlungsinstrumenten, wodurch der Praxisalltag optimiert und der Komfort für den Benutzer erhöht wird.

## Patentansprüche

1. Steuereinheit (1) zum Betreiben zahnmedizinischer Instrumente, wobei die Steuereinheit (1) aufweist:
Anschlüsse (41, 42) für die zu betreibenden Instrumente, wobei zumindest ein erster Anschluss (41) für ein medizinisches Motor-Instrument (100) vorgesehen ist, das einen Elektromotor zum Antreiben eines Werkzeugs aufweist, sowie
eine Motorelektronik (5) zum Versorgen eines angeschlossenen Motor-Instruments (100), wobei die Motorelektronik (5) ein Steuerungsteil (10) sowie eine von dem Steuerungsteil (10) betriebene Endstufe (20) aufweist, welche drei Ausgänge (21, 22, 23) aufweist, die zum Versorgen eines an den ersten Anschluss (41) angeschlossenen Motor-Instruments (100) mit einem 3-Phasen-Wechselstrom vorgehen sind,
und wobei die Anschlüsse (41, 42) für die zu betreibenden Instrumente zumindest einen zweiten Anschluss (42) für ein Ultraschall-Behandlungsinstrument (200) umfassen, welches ein piezoelektrisches Element zum Erzeugen von Ultraschall-Schwingungen aufweist,
**dadurch gekennzeichnet,**
**dass** die Motorelektronik (5) dazu ausgebildet ist, zwei der drei Ausgänge (21, 22, 23) der Endstufe (20) zu verwenden, um das piezoelektrische Element eines an den zweiten Anschluss (42) angeschlossenen Ultraschall-Behandlungsinstruments (200) mit Wechselspannung zu versorgen.

2. Steuereinheit (1) zum Betreiben zahnmedizinischer Instrumente nach Anspruch 1,
**dadurch gekennzeichnet,**
**dass** diese eine Schaltmatrix (30) aufweist, welche eingangsseitig mit den Ausgängen (21, 22, 23) der Endstufe (20) der Motorelektronik (5) verbunden ist und welche dazu ausgebildet ist, abhängig von der Auswahl des zu betreibenden Instruments
a) die drei Ausgänge (21, 22, 23) der Endstufe (20) der Motorelektronik (5) mit dem ersten Anschluss (41) für ein medizinisches Motor-Instrument (100) oder
b) zwei der drei Ausgänge (21, 22, 23) der Endstufe (20) der Motorelektronik (5) mit dem zweiten Anschluss (42) für ein Ultraschall-Behandlungsinstrument (200) elektrisch zu verbinden.

3. Steuereinheit (1) zum Betreiben zahnmedizinischer Instrumente nach Anspruch 2,
**dadurch gekennzeichnet,**
**dass** zwischen die Schaltmatrix (30) und den zweiten Anschluss (42) für ein Ultraschall-Behandlungsinstrument (200) eine Anpassungsstufe (50) geschaltet ist, welche dazu ausgebildet ist, die von der Endstufe (20) ausgegebene Spannung auf einen zum Betreiben eines piezoelektrischen Elements geeigneten Spannungspegel zu transformieren.

4. Steuereinheit (1) zum Betreiben zahnmedizinischer Instrumente nach Anspruch 3,
**dadurch gekennzeichnet,**
**dass** die Anpassungsstufe (50) einen Übertrager (51) zur Einstellung des Spannungspegels zum Betreiben des piezoelektrischen Elements umfasst.

5. Steuereinheit (1) zum Betreiben zahnmedizinischer Instrumente nach einem der vorherigen Ansprüche,
**dadurch gekennzeichnet,**
**dass** das Steuerungsteil (10) dazu ausgebildet ist, die Endstufe (20) derart zu betreiben, dass die Abgabe von Spannungssignalen über die Ausgänge (21, 22, 23) der Endstufe (20) abhängig von dem zu betreibenden medizinischen Instrument erfolgt.

6. Steuereinheit (1) nach Anspruch 5,
**dadurch gekennzeichnet,**
**dass** für jeden Ausgang (21, 22, 23) der Endstufe (20) die Frequenz, die Phase, ein PWM-Duty-Cycle und/oder die Amplitude der abgegebenen Spannung abhängig von dem zu betreibenden Instrument eingestellt wird.

7. Steuereinheit (1) zum Betreiben zahnmedizinischer Instrumente nach Anspruch 5 oder 6, **dadurch gekennzeichnet,**
**dass** bei der Erzeugung der Spannungssignale an den Ausgängen (21, 22, 23) der Endstufe (20) zusätzlich zumindest einer der folgenden Parameter berücksichtigt wird,
• ein Typ des Motors oder des piezoelektrischen Elements eines zu betreibenden Instruments;
• eine vorgegebene Leistung für den Betrieb des Motors oder des piezoelektrischen Elements;
• eine gewünschte Motordrehzahl oder ein gewünschtes Drehmoment des Motors;
• eine gewünschte Schwingweite eines von dem piezoelektrischen Element angetriebenen Werkzeugs.

8. Steuereinheit (1) zum Betreiben zahnmedizinischer Instrumente nach einem der vorherigen Ansprüche,
**dadurch gekennzeichnet,**
**dass** die Steuereinheit (1) dazu ausgebildet ist, selbständig den Anschluss eines medizinischen Instruments an den Anschlüssen (41, 42) zu erkennen und abhängig von dem erkannten Instrument die Endstufe (20) zu betreiben.

9. Steuereinheit (1) zum Betreiben zahnmedizinischer Instrumente nach einem der vorherigen Ansprüche,
**dadurch gekennzeichnet,**
**dass** die Endstufe (20) der Motorelektronik (5) drei individuell steuerbare Halbbrücken (24, 26, 28) aufweist.

10. Steuereinheit (1) zum Betreiben zahnmedizinischer Instrumente nach Anspruch 9,
**dadurch gekennzeichnet,**
**dass** das Steuerungsteil (10) einen Mikrocontroller beinhaltet, der Treiber (25, 27, 29) für die steuerbaren Halbbrücken (24, 26, 28) digital ansteuert.

11. Zahnmedizinische Behandlungseinheit (300) zum Versorgen zahnmedizinischer Instrumente (100, 200),
wobei die Behandlungseinheit (300) zumindest eine Steuereinheit (1) nach einem der vorherigen Ansprüche aufweist und ferner dazu ausgebildet ist, angeschlossene zahnmedizinische Instrumente zusätzliche mit Medien, insbesondere mit Luft, Wasser und oder Licht zu versorgen.

12. Verfahren zum Betreiben zahnmedizinischer Instrumente mit Hilfe einer Steuereinheit (1), die Anschlüsse (41, 42) für die zu betreibenden Instrumente sowie eine Motorelektronik (5) aufweist, welche drei Ausgänge (21, 22, 23) zum Abgeben eines 3-Phasen-Wechselstroms aufweist,
**dadurch gekennzeichnet,**
**dass** abhängig von einem Typ eines zu betreibenden zahnmedizinischen Instruments
a) in einem Motorbetrieb (S14) über die drei Ausgänge (21, 22, 23) ein 3-Phasen-Wechselstrom oder
b) in einem Piezobetrieb (S24) über zwei der drei Ausgänge (21, 22, 23) eine Wechselspannung
abgegeben wird.

13. Verfahren nach Anspruch 12,
**dadurch gekennzeichnet**
**dass**
• der 3-Phasenwechselstrom abgegeben wird, wenn es sich bei dem zu betreibenden Instrument um ein medizinisches Motor-Instrument (100) handelt, das einen Elektromotor zum Antreiben eines Werkzeugs aufweist,
• die Wechselspannung abgegeben wird, wenn es sich bei dem zu betreibenden Instrument um ein Ultraschall-Behandlungsinstrument (200) handelt, welches ein piezoelektrisches Element zum Erzeugen von Ultraschall-Schwingungen aufweist.

14. Verfahren nach Anspruch 12 oder 13,
**dadurch gekennzeichnet,**
**dass** bei der Erzeugung der Spannungssignale an den Ausgängen (21, 22, 23) zusätzlich zumindest einer der folgenden Parameter berücksichtigt wird,
• ein Typ des Motors oder des piezoelektrischen Elements eines zu betreibenden Instruments;
• eine vorgegebene Leistung für den Betrieb des Motors oder des piezoelektrischen Elements;
• eine gewünschte Motordrehzahl oder ein gewünschtes Drehmoment des Motors;
• eine gewünschte Schwingweite eines von dem piezoelektrischen Element angetriebenen Werkzeugs.
